(19) Europäisches Patentamt
European Patent Office
Office européen des brevets

(11) EP 0 747 211 B1

(12) EUROPÄISCHE PATENTSCHRIFT

(45) Veröffentlichungstag und Bekanntmachung des Hinweises auf die Patenterteilung:
**09.08.2000 Patentblatt 2000/32**

(51) Int Cl.$^7$: **B32B 27/32**

(21) Anmeldenummer: **96108221.1**

(22) Anmeldetag: **23.05.1996**

# (54) Biaxial orientierte Polypropylenfolie mit verbesserten Eigenschaften hinsichtlich Mechanik und Barriere

Biaxially oriented polypropylene film with improved mechanical and barrier properties

Film de polypropylène orienté biaxialement ayant des propriétés mécaniques et de barrière améliorées

(84) Benannte Vertragsstaaten:
**AT BE DE ES FR GB IT NL**

(30) Priorität: **31.05.1995 DE 19519260**
**27.12.1995 DE 19548790**

(43) Veröffentlichungstag der Anmeldung:
**11.12.1996 Patentblatt 1996/50**

(73) Patentinhaber: **HOECHST AKTIENGESELLSCHAFT**
**65929 Frankfurt am Main (DE)**

(72) Erfinder:
- **Peiffer, Herbert, Dr.**
  **55126 Mainz (DE)**
- **Busch, Detlef, Dr.**
  **66740 Saarlouis (DE)**
- **Dries, Thomas, Dr.**
  **55270 Schwabenheim (DE)**
- **Schlögl, Gunter, Dr.**
  **65779 Kelkheim (DE)**
- **Winter, Andreas, Dr.**
  **61479 Glashütten (DE)**

(74) Vertreter: **Luderschmidt, Schüler & Partner GbR**
**Patentanwälte,**
**Postfach 3929**
**65029 Wiesbaden (DE)**

(56) Entgegenhaltungen:
**EP-A- 0 282 917**
**EP-A- 0 384 263**
**EP-A- 0 645 426**
**WO-A-95/30708**
**DE-A- 4 228 812**
**DE-A- 4 242 486**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine biaxial orientierte Polypropylenfolie mit verbesserten Barriereeigenschaften hinsichtlich Durchtritt von Wasserdampf und Sauerstoff und verbesserten mechanischen Eigenschaften, ein Verfahren zu ihrer Herstellung und ihre Verwendung.

Die Verbesserung der mechanischen Eigenschaften von Folien, insbesondere von Folien für den Verpackungssektor, hat in letzter Zeit an Bedeutung zugenommen. Aus Kosten- und aus Umweltgründen wünscht die Verpackungsindustrie immer dünnere Folien bei gleichbleibender Maschinengängigkeit und gleichbleibenden bzw. verbesserten Barriereeigenschaften, insbesondere hinsichtlich Durchtritt von Wasserdampf und Sauerstoff.

Dünnere Folien haben jedoch eine überproportional schlechtere Steifigkeit in Maschinenrichtung und damit ein wesentlich schlechteres Maschinenlaufverhalten, insbesondere auf den heutigen schnellaufenden Einschlagsmaschinen. Daneben verringern sich mit der Reduzierung der Foliendicke die Barriereeigenschaften ebenfalls überproportional. Infolge der schlechteren Barriereeigenschaften dünner Folien wird die Schutzwirkung der Folie gegenüber Verderben des Füllgutes stark eingeschränkt.

Die Steifigkeit (S) der Folie ist proportional dem Elastizitätsmodul (E) und der dritten Potenz der Dicke (d) [ $S = E\ d^3$]. Daher hat man bei dünneren Folien nur die Möglichkeit, den Verlust an Steifigkeit über den Elastizitätsmodul der Folie zu kompensieren.

Die Erhöhung des Elastizitätsmoduls (E-Modul) in Maschinenrichtung ist seit jeher Gegenstand intensiver Bemühungen, weil diese mechanische Eigenschaft in unmittelbarem Zusammenhang mit der anwendungstechnischen Eignung steht und somit das Verarbeitungsverhalten direkt bestimmt.

Wie in den Produkt-Übersichten der Firmen Mobil Plastics Europe und Hoechst AG dargestellt liegt beispielsweise der Zug-E-Modul (DIN 53 457, ASTM 882) von üblichen boPP-Folien in Längsrichtung unabhängig von der Dicke zwischen 2 000 und 2 200 N/mm$^2$.

Die Barriere von boPP-Folien hinsichtlich Wasserdampf (WDD) und Sauerstoff (SDD) nimmt mit der Foliendicke ab. Im üblichen Dickenbereich von boPP-Folien (4 bis 100 µm) besteht z.B. zwischen der Wasserdampfbarriere (WDD) und der Dicke (d) näherungsweise ein hyperbolischer Zusammenhang (WDD * d = const.). Die Konstante hängt im wesentlichen von der Rohstoffzusammensetzung und den Streckbedingungen ab. Für boPP-Verpackungsfolien nach dem Stand der Technik hat die Konstante einen Wert von etwa: const. = 28 g µm/m$^2$ d. Die Wasserdampfdurchlässigkeit wurde hierbei nach DIN 53 122 gemessen. Aus den genannten Produkt-Übersichten geht hervor, daß beispielsweise die Wasserdampfdurchlässigkeit einer 25 µm dicken boPP-Folie bei 1,1 g/m$^2$ d liegt.

Es ist bekannt, bei boPP-Folien den E-Modul in Maschinenrichtung entweder über die Verfahrenstechnik oder über Rohstoffmodifikationen oder die Kombination beider Möglichkeiten zu erhöhen.

Eine Möglichkeit zur Herstellung von hochfesten Polypropylenfolien ist ein drei- oder mehrstufiges Streckverfahren, wie es beispielsweise in der EP-B-0 116 457 beschrieben ist. Ein solches Herstellverfahren hat jedoch den Nachteil, daß es eine zusätzliche Vorrichtung zur Nachlängsstreckung benötigt und dadurch sehr aufwendig ist. Darüber hinaus ist es gegen Störungen im Produktionsablauf, z.B. Folienabrisse, sehr anfällig.

Ferner weisen solche nachlängsgestreckten Folien einen gegenüber lediglich biaxial verstreckten Folien deutlich erhöhten Längsschrumpf auf, der es in der Regel verhindert, daß die Folien eine thermische Trocknung, wie sie z.B. nach dem Aufbringen von Klebermassen zum Teil noch üblich ist, ohne unerwünschte Schrumpffalten überstehen.

Die Modifizierung der für die Herstellung von hochfesten Polypropylenfolien verwendeten Rohstoffe mit verschiedenen Kohlenwasserstoffharzen ist beispielsweise in der US-A-3,937,762 beschrieben. Eine solche Rohstoffmodifizierung ermöglicht die Herstellung von Polypropylenfolien, deren mechanische Festigkeit in Längsrichtung gegenüber Folien aus unmodifizierten Rohstoffen deutlich verbessert ist, die Werte nachlängsverstreckter Folien jedoch nicht erreicht, und deren Schrumpf in Längsrichtung ebenfalls relativ hoch ist.

In der EP-A-0 406 642 wird eine boPP-Folie mit hoher mechanischer Festigkeit beschrieben. Der hohe E-Modul in Längsrichtung wird dadurch erreicht, daß die Basisschicht 5 bis 30 Gew.-% eines Kohlenwasserstoffharzes und 0,01 bis 1,0 Gew.-% eines Nukleierungsmittels enthält. Über Barriereeigenschaften wird in dieser Schrift keine Ausage gemacht. In den Beispielen wird eine Harzkonzentration von 20 Gew.-% angegeben.

Derartig hohe Harzkonzentrationen führen zu Problemen bei der Folienherstellung. Insbesondere treten nach kurzer Zeit Ablagerungen an der Schnecke des Plastifizierextruders und an den Walzen der Längsstreckung auf. Daneben führt die Zugabe von Nukleierungsmittel in der angegebenen Konzentration zu optischen Foliendefekten in Form von sogenannten "Stippen" und "Blasen", die natürlich äußerst unerwünscht sind. Außerdem ist das Regenerat derartiger Folien aufgrund von Agglomeratneigung im Folienherstellprozeß nicht mehr einsetzbar. Weiterhin sind die in den Beispielen 3 bis 6 angegebenen Streckverhältnisse auf keiner Produktionsmaschine bei den üblichen Geschwindigkeiten mit dem dort beschriebenen Homopolymer zu realisieren. Es treten ständig Folienabrisse, insbesondere in der Querstreckung auf.

Hervorragende mechanische Eigenschaften lassen sich durch die Kombination eines Harzzusatzes zum eingesetzten Rohstoff mit einem Nachlängsstreckprozeß erzielen. Eine entsprechende Vorgehensweise ist in der EP-A-0 079 520 beschrieben; es werden Elastizitätsmodule in Längsrichtung von 4 000 bis 6 000 N/mm$^2$ erreicht. Allerdings hat auch dieses Verfahren den Nachteil, daß ein aufwendiges und störanfälliges Nachlängsstreckverfahren erforderlich ist.

In der US-A-4,921,749 (= EP-A-0 247 898) wird eine siegelfähige boPP-Folie mit verbesserten mechanischen und optischen Eigenschaften beschrieben. Ebenfalls verbessert sind die Siegelbarkeit der Folie und die Durchlässigkeit für Wasserdampf und Sauerstoff. Sämtliche Verbesserungen resultieren aus der Zugabe eines niedrigmolekularen Harzes in die Basisschicht. Der Harzanteil beträgt dabei zwischen 3 und 30 Gew.-%. Das Harz hat ein Molekulargewicht deutlich kleiner als 5 000, bevorzugt kleiner als 1 000, und beträgt beispielsweise 600. Der Erweichungspunkt des Harzes liegt bei 120 bis 140°C.

In der EP-A-0 468 333 wird eine siegelfähige Folie mit verbesserten Barriereeigenschaften hinsichtlich Durchtritt von Wasserdampf und Sauerstoff bei gleichzeitig guten Gleiteigenschaften und niedrigen Schrumpfwerten beschrieben. Die kennzeichnenden Merkmale dieser boPP-Folie sind darin zu sehen, daß sie aus einer Basisschicht aufgebaut ist, welche aus einem Polypropylen und einem Kohlenwasserstoffharz mit einem Erweichungspunkt von größer 140°C besteht, und daß sie wenigstens eine siegelfähige Deckschicht aufweist, die gegebenenfalls zusätzlich ein Kohlenwasserstoffharz enthält. Die Basisschicht und die Deckschicht enthalten mindestens ein Antiblockmittel und/oder ein Gleitmittel.

In der US-A-4,921,749 und in der EP-A-0 468 333 werden hohe Konzentrationen an Kohlenwasserstoffharz eingesetzt, um die Barriereeigenschaften zu erhöhen. Derartig hohe Harzgehalte führen zu Problemen bei der Folienherstellung. Insbesondere treten nach kurzer Zeit Harzablagerungen an der Schnecke des Extruders und an den Längsstreckwalzen auf. Infolge der hohen Harzgehalte zeigen die Folien hohe Warmblockwerte und weisen eine störende Blockneigung bei der Weiterverarbeitung auf.

EP-A- 0 645 426 betrifft eine biaxial orientierte Polypropylenfolie mit verbesserten Eigenschaften hinsichtlich Mechanik und Barriere, ein Verfahren zu ihrer Herstellung und ihre Verwendung.

Die Aufgabe der vorliegenden Erfindung bestand darin, eine biaxial orientierte Polypropylenfolie zur Verfügung zu stellen, die sich durch einen hohen E-Modul in Maschinenrichtung und erhöhte Barriereeigenschaften hinsichtlich Durchtritt von Wasserdampf und Sauerstoff auszeichnet. Die Nachteile des Nachlängsstreckprozesses wie technische Umbauten an der Produktionsmaschine, Störungen durch häufige Folienabrisse und hoher Restschrumpf der boPP-Folien sollen vermieden werden. Weiterhin muß gewährleistet sein, daß das Regenerat in einer Konzentration von 20 bis 50 Gew.-%, bezogen auf das Gesamtgewicht der Folie, wieder zugeführt werden kann. Die Folie muß lauf- und verfahrenssicher bei Produktionsgeschwindigkeiten von bis zu 400 m/min herstellbar sein. Andere physikalische Folieneigenschaften, die im Hinblick auf deren Verwendung als Verpackungsfolie und/oder als Kaschierfolie gefordert sind, dürfen nicht nachteilig beeinflußt werden. Die Folie soll einen hohen Glanz, keine optischen Defekte in Form von Stippen oder Blasen, eine gute Kratzfestigkeit, auch bei einer niedrigen Foliendicke einen störungsfreien Lauf auf schnellaufenden Verpackungsmaschinen und im Falle transparenter Folientypen eine niedrige Folientrübung aufweisen.

Diese Aufgabe wird erfindungsgemäß durch eine biaxial orientierte Polypropylenfolie mit mindestens einer Basisschicht welche Polypropylen enthält gelöst, wobei in der Basisschicht ein Polypropylen eingesetzt wird dessen kennzeichnende Merkmale darin bestehen, daß

- die mittlere isotaktische Blocklänge des Polypropylenmoleküls zwischen zwei Kettenbaufehlern im statistischen Mittel größer 40 ist
- der n-heptanunlösliche Anteil des Polypropylens einen Kettenisotaxie-Index, gemessen mittels $^{13}$C-NMR-Spektroskopie, von mindestens 95 % aufweist,
- das Verhältnis von Gewichtsmittel $M_w$ zu Zahlenmittel $M_n$ der Molekulargewichtsverteilung kleiner als 4 ist, und
- der n-heptanlösliche Anteil des Polypropylens kleiner als 1% ist.

Die Unteransprüche geben bevorzugte Ausführungsformen der Erfindung an, welche nachstehend zusätzlich erläutert werden.

Erfindungsgemäß kann die Folie mehrschichtig oder auch einschichtig sein und besteht dann nur aus der im folgenden beschriebenen Basisschicht. Die Basisschicht ist im Sinne der vorliegenden Erfindung diejenige Schicht, welche die größte Schichtdicke von allen vorhandenen Schichten aufweist. Im allgemeinen macht die Basisschicht bei mehrschichtigen Ausführungsformen mindestens 40 %, vorzugsweise 50 bis 98 %, der Gesamtfoliendicke aus. In der mehrschichtigen Ausführungsform weist die Folie auf ihrer Basisschicht mindestens eine, gegebenenfalls beidseitig Deckschicht/en auf, welche die äußeren Schichten der Folie bilden. In einer weiteren mehrschichtigen Ausführungsform weist die Folie auf ihrer Basisschicht mindestens eine, gegebenenfalls beidseitig Zwischenschicht/en auf.

Die Basisschicht der Folie enthält im allgemeinen mindestens 85-100 Gew.-%, vorzugsweise 90-99 Gew.-%, insbesondere 90-95 Gew.-%, jeweils bezogen auf die Basissicht eines nachstehend beschriebenen Propylenpolymeren, welches sich strukturell wesentlich von den herkömmlichen isotaktischen Propylenhomopolymeren, die üblicherweise in der Basisschicht von boPP-Folien eingesetzt werden, unterscheidet. Diese Strukturunterschiede können durch die Herstellung der Propylenpolymeren mittels neuartiger Metallocen-Katalysatoren erzielt werden.

Ein Merkmal dieses Strukturunterschiedes ist eine mittlere isotaktische Blocklänge des Propylenpolymeren zwischen zwei Kettenbaufehlern von mindestens 40, vorzugsweise mindestens 60 und insbesondere mindestens 70 Propyleneinheiten.

Das erfindungsgemäß eingesetzte Polypropylen kann zusätzlich über weitere Parameter charakterisiert werden, die mit der besonderen Struktur des Polymeren verknüpft sind.

Neben einer definierten mittleren isotaktischen Blocklänge zeichnet sich das Polypropylen durch einen besonders niedrigen n-heptanlöslichen Anteil aus, der kleiner als 1,0 Gew.-%., vorzugsweise > 0 - 0,6 Gew.-% ist und insbesondere im Bereich von 0,5 bis 0,005 Gew.-% liegt, jeweils bezogen auf das Gewicht des Ausgangspolymeren.

Der n-heptanunlösliche Anteil des Propylenpolymeren ist im allgemeinen hochisotaktisch. Der mittels $^{13}C$-NMR-Spektroskopie bestimmte Kettenisotaxie-Index des n-heptanunlöslichen Anteils beträgt mindestens 95 %, vorzugsweise mindestens 96 % und insbesondere mindestens 97 - 99 %.

Die Molekulargewichtsverteilung ist ein weiterer geeigneter Parameter zur Charakterisierung der Polymerstruktur des Propylenpolymeren. Sie ist vorteilhafterweise vergleichsweise eng. Das Verhältnis des Gewichtsmittels $M_w$ zum Zahlenmittel $M_n$ beträgt bevorzugt weniger als 4, vorzugsweise weniger als 3. Es liegt insbesondere im Bereich von 1,5 bis 2,7.

Es war völlig überraschend, daß sich diese neuartigen Polypropylene trotz des ausgesprochen niedrigen n-heptanlöslichen Anteiles, des hohen Kettenisotaxie-Index und der sehr engen Molekulargewichtsverteilung zu biaxial orientierten Polypropylenfolien verstrecken lassen. Weiterhin war es sehr überraschend, daß die aus dem neuartigen Polymeren hergestellten Folien deutlich verbesserte mechanische Eigenschaften, insbesondere einen erhöhten E-Modul in Längsrichtung, aufzeigen.

Es hat sich gezeigt, daß die Strukturunterschiede des Polypropylens, die durch dessen Herstellung mittels Metallocen-Katalysator bedingt sind, günstig für die mechanischen Eigenschaften der daraushergestellten Folien sind. Der E-Modul in Längsrichtung ist bei Folien mit einer Basisschicht aus Metallocen-PP deutlich höher als bei entsprechenden Folien aus Standard PP.

Das Propylenpolymer der vorstehend beschriebenen Struktur enthält im allgemeinen mindestens 90 Gew.-%, vorzugweise 94 bis 100 Gew.-%, insbesondere 98 bis 100 Gew.-%, Propyleneinheiten. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen. Die Angaben in Gew.-% beziehen sich jeweils auf das Propylenpolymere. Der Schmelzpunkt liegt im allgemeinen im Bereich von 140 bis 175°C, vorzugsweise von 150 bis 165°C und insbesondere von 155 bis 162°C und der Schmelzflußindex (Messung DIN 53 735 bei 21,6 N Belastung und 230°C) beträgt 1,0 bis 30 g/10 min, vorzugsweise von 1,5 bis 20 g/10 min und insbesondere 2,0 bis 16 g/10 min.

Die vorstehend beschrieben Polypropylene können vorteilhaft durch an sich bekannte Verfahren hergestellt werden, bei denen Metallocenkatalysatoren eingesetzt werden. Die Herstellung dieser Polypropylene ist nicht Gegenstand der vorliegenden Erfindung. Die entsprechenden Verfahren sind bereits in EP-A-0 302 424, EP-A-0 336 128 und EP-A-0 336 127 und EP-A- 0 576 970 beschrieben, auf die hier ausdrücklich Bezug genommen wird.

Die herkömmlichen Ziegler-Natta-Katalysatoren die zur Herstellung von Standard PP eingesetzt werden weisen mehrere unterschiedliche polymerisationsaktive Zentren auf, von denen jedes ein andersartiges Polymeres herstellt. Dies führt zu Ketten mit stark unterschiedlichen Molmassen. Es werden praktisch sowohl wachsartige Polymere mit Kettenlängen von $M_n$ kleiner als 10 000 als auch ultrahochmolekulare Polymere mit einem $M_n$ von größer als 1 000 000 erhalten. Gleichzeitig sind die aktiven Zentren unterschiedlich in ihrer Stereospezifität. Das Spektrum reicht von völlig unspezifischen Zentren über syndiospezifische Zentren zu isospezifischen Zentren, wobei letztere wiederum eine unterschiedliche Isospezifität aufweisen. Dies führt zu einem Produktgemisch aus ataktischem Polypropylen, syndiotaktischem Polypropylen und isotaktischem Polypropylen mit unterschiedlicher Kristallinität, d.h., mit unterschiedlichen Schmelzpunkten. Syndiotaktisches Polypropylen führt zu Verzug in der Folie, ataktisches Polypropylen zu Ausdünstungen (Migration) und zur Reduzierung der Folienhärte und das isotaktisches Polypropylen ist ein Material mit unterschiedlichen Schmelzpunkten, also kein einheitliches Produkt.

Kleine Schwankungen in den Polymerisationsbedingungen führen zu Schwankungen in der Zusammensetzung der drei charakteristischen Kettentypen, d.h. wiederum zu einem unterschiedlichen, nicht eindeutig zu charakterisierenden Produkt.

Die Metallocen-Katalysatoren die für die Herstellung von Metallocen-PP eingesetzt werden haben dagegen ein eindeutig zu charakterisierendes Polymerisationszentrum, das auf den jeweiligen wünschenswerten Polymertypen durch Variation der Metallocen-Ligand-Sphäre maßgeschneidert werden kann. Die Verteilung der Kettenlänge ist einheitlich. Das $M_w/M_n$ ist klein und liegt zwischen 1,7 und 4,0, vorzugsweise zwischen 1,8 und 3,0 und ganz insbesondere zwischen 2,0 und 2,7 (Schulz-Flory-Verteilung). Gleichfalls weisen die aktiven Zentren auch eine einheitliche Stereospezifität auf, was zu Ketten mit einem einheitlichen Schmelzpunkt, bzw. Ketten mit einheitlichem stereospezifischem Aufbau führt. Es werden somit Polymerketten gebildet, die sich in ihren mittleren isotaktischen Blocklängen nur geringfügig unterscheiden. Dies spiegelt sich auch in einem einheitlichen Schmelzpunkt wieder.

Die Basisschicht der erfindungsgemäßen Folie kann gegebenenfalls zusätzlich zu dem vorstehend beschriebenen Metallocen-Propylenpolymeren übliche Additive in jeweils wirksamen Mengen enthalten. Übliche Additive sind Antiblockmittel, Neutralisationsmittel, Stabilisatoren, Antistatika und/oder Gleitmittel.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren ist Glycerinmonostearat geeignet und wird in einer Menge von 0,03 % bis 0,5 % als Antistatikum eingesetzt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,8 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht. Ein insbesondere geeignetes aliphatisches Säureamid ist Erucasäureamid. Der Zusatz von Polydimethylsiloxanen ist im Bereich von 0,02 bis 2,0 Gew.-% bevorzugt, insbesondere Polydimethylsiloxane mit einer Viskosität von 5 000 bis 1 000 000 $mm^2/s$.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 $m^2/g$.

Die erfindungsgemäße Polypropylenfolie umfaßt in einer bevorzugten mehrschichtigen Ausführungsform mindestens eine, gegebenenfalls beidseitig Deckschicht/en aus Polymeren aus α-Olefinen mit 2 bis 10 Kohlenstoffatomen. Im allgemeinen enthält die Deckschicht mindestens 70 Gew.-%, vorzugsweise 80 bis 100 Gew.-%, insbesondere 90 bis 98 Gew.-%, der α-olefinischen Polymeren, jeweils bezogen auf das Gewicht der Deckschicht und gegebenfalls vorstehend beschriebene Additive in jeweils wirksamen Mengen.

Beispiele für derartige α-olefinische Polymere sind

- ein Propylenhomopolymer oder
- ein Copolymer von
  - Ethylen und Propylen oder
  - Ethylen und Butylen-1 oder
  - Propylen und Butylen-1 oder
- ein Terpolymer von
  - Ethylen und Propylen und Butylen-1 oder
- eine Mischung aus zwei oder mehreren der genannten Homo-, Co- und Terpolymeren oder
- ein Blend aus zwei oder mehreren der genannten Homo-, Co- und Terpolymeren, gegebenenfalls gemischt mit einem oder mehreren der genannten Homo-, Co- und Terpolymeren,

wobei insbesondere Propylenhomopolymer oder

- statistische Ethylen-Propylen-Copolymere mit
  - einem Ethylengehalt von 1 bis 10 Gew.-%, bevorzugt 2,5 bis 8 Gew.-%, oder
- statistische Propylen-Butylen-1-Copolymere mit
  - einem Butylengehalt von 2 bis 25 Gew.-%, bevorzugt 4 bis 20 Gew.-%,

jeweils bezogen auf das Gesamtgewicht des Copolymeren, oder statistische Ethylen-Propylen-Butylen-1-Terpolymere mit

- einem Ethylengehalt von 1 bis 10 Gew.-%, bevorzugt 2 bis 6 Gew.-%, und
- einem Butylen-1-Gehalt von 2 bis 20 Gew.-%, bevorzugt 4 bis 20 Gew.-%,

jeweils bezogen auf das Gesamtgewicht des Terpolymeren, oder

ein Blend aus einem Ethylen-Propylen-Butylen-1-Terpolymeren und einem Propylen-Butylen-1 -Copolymeren

mit einem Ethylengehalt von 0,1 bis 7 Gew.-%

und einem Propylengehalt von 50 bis 90 Gew.-%

und einem Butylen-1-Gehalt von 10 bis 40 Gew.-%,

jeweils bezogen auf das Gesamtgewicht des Polymerblends,

bevorzugt sind.

Das in der Deckschicht eingesetzte Propylenhomopolymere besitzt einen Schmelzpunkt von 140°C oder höher, vorzugsweise 150 bis 165°C. Isotaktisches Homopolypropylen mit einem n-heptanlöslichen Anteil von 6 Gew.-% und weniger, bezogen auf das isotaktische Homopolypropylen, ist bevorzugt. Das Homopolymere hat im allgemeinen einen Schmelzflußindex von 1,0 g/10 min bis 20 g/10 min.

Die in der Deckschicht bevorzugt eingesetzten vorstehend beschriebenen Co- und Terpolymeren weisen im allgemeinen einen Schmelzflußindex von 1,5 bis 30 g/10 min auf. Der Schmelzpunkt liegt vorzugsweise im Bereich von 120 bis 140°C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230°C und einer Kraft von 21,6 N (DIN 53 735) gemessen.

In einer matten Ausführungsform enthält die Deckschicht zusätzlich ein High Density Polyethylen (HDPE), welches mit den vorstehend beschriebenen Deckschichtpolymeren gemischt oder geblendet wird. Die Zusammensetzung und Einzelheiten der matten Deckschichten sind beispielsweise in der deutschen Patentanmeldung P 43 13 430.0 beschrieben, auf die hier ausdrücklich Bezug genommen wird.

Die Deckschicht/en kann/können auch das vorstehend für die Basisschicht beschriebene Metallocen-katalysierte-Propylenpolymere enthalten.

Gegebenenfalls können der/den Deckschicht/en die vorstehend für die Basisschicht beschriebenen Additive wie Antistatika, Antiblockmittel, Gleitmittel, Neutralisationsmittel und Stabilisatoren zugesetzt werden. Die Mengenangaben in diesen vorstehenden Ausführungen beziehen sich auf das entsprechende Gewicht der Deckschicht. In einer bevorzugten Ausführungsform enthält/enthalten die Deckschicht/en eine Kombination von Antiblockmittel, vorzugsweise $SiO_2$, und Gleitmittel, vorzugsweise Polydimethylsiloxan.

Die erfindungsgemäße Folie umfaßt mindestens die vorstehend beschriebene Basisschicht, vorzugsweise mindestens eine Deckschicht. Je nach ihrem vorgesehenen Verwendungszweck kann die Folie eine weitere Deckschicht auf der gegenüberliegenden Seite aufweisen. Gegebenenfalls kann/können auch einseitig eine oder beidseitig Zwischenschicht/en zwischen der Basis- und der/den Deckschicht/en aufgebracht werden.

Bevorzugte Ausführungsformen der erfindungsgemäßen Polypropylenfolie sind dreischichtig. Aufbau, Dicke und Zusammensetzung einer zweiten Deckschicht können unabhängig von der bereits vorhandenen Deckschicht gewählt werden, wobei die zweite Deckschicht ebenfalls eine der vorstehend beschriebenen Polymeren oder Polymermischungen enthalten kann, welche aber nicht mit der der ersten Deckschicht identisch sein muß. Die zweite Deckschicht kann jedoch auch andere gängige Deckschichtpolymere enthalten.

Die Dicke der Deckschicht/en ist im allgemeinen größer als 0,1 µm und liegt vorzugsweise im Bereich von 0,1 bis 10 µm, vorzugsweise im Bereich von 0,3 bis 3 µm, insbesondere im Bereich von 0,4 bis 1,5 µm, wobei beidseitige Deckschichten gleich oder verschieden dick sein können.

Die Zwischenschicht/en kann/können aus den für die Deckschichten beschriebenen α-olefinischen Polymeren bestehen. In einer bevorzugten Ausführungsform besteht/bestehen die Zwischenschicht/en aus dem für die Basisschicht beschriebenen Propylenpolymeren. Die Zwischenschicht/en kann/können die für die einzelnen Schichten beschriebenen üblichen Additive enthalten. Die Dicke der Zwischenschicht/en ist im allgemeinen größer als 0,3 µm und liegt vorzugsweise im Bereich von 1,0 bis 15 µm, insbesondere 1,5-10 µm.

Die Gesamtdicke der erfindungsgemäßen Polypropylenfolie kann innerhalb weiter Grenzen variieren und richtet sich nach dem beabsichtigten Einsatz. Sie beträgt vorzugsweise 4 bis 100 µm, insbesondere 5-60 µm, vorzugweise 6-30 µm, wobei die Basisschicht etwa 40 bis 100 % der Gesamtfoliendicke ausmacht.

Die Erfindung betrifft weiterhin ein Verfahren zur Herstellung der erfindungsgemäßen Polypropylenfolie nach dem an sich bekannten Coextrusionsverfahren.

Im Rahmen dieses Verfahrens wird so vorgegangen, daß die Schicht oder die den einzelnen Schichten der Folie entsprechende/n Schmelze/n durch eine Flachdüse extrudiert bzw. coextrudiert wird/werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen

Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstreckungsverhältnisse liegen im Bereich von 3 bis 9, vorzugsweise 4,5 - 8,5. Die Querstreckverhältnisse liegen im Bereich von 4 bis 12, vorzugsweise 5-11, insbesondere 7 bis 10.

An die biaxiale Streckung der Folie schließt sich ihre Thermofixierung (Wärmebehandlung) an, wobei die Folie etwa 0,1 bis 10 s lang bei einer Temperatur von 100 bis 160°C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie abgekühlt und verfestigt wird, durch einen Heiz- und Kühlkreislauf bei einer Temperatur von 10 bis 100°C, vorzugsweise 20-70°C zu halten.

Die Temperaturen, bei denen Längs- und Querstreckung durchgeführt werden, können in einem relativ großen Bereich variieren und richten sich nach den gewünschten Eigenschaften der Folie. Im allgemeinen wird die Längsstreckung vorzugsweise bei 80 bis 170°C, vorzugsweise 80-150°C und die Querstreckung vorzugsweise bei 100 bis 200°C, vorzugsweise 120-170°C durchgeführt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von 37 bis 50 mN/m, vorzugsweise 39 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Folie zeichnet sich durch hervorragende mechanische Festigkeiten aus. Der Elastizitätsmodul der Basisschicht in Längsrichtung, die das mittels Metallocen-Katalysator hergestellte Polypropylenpolymer enthält, liegt bei größer 2 400 $N/mm^2$, vorzugsweise größer 2 500 $N/mm^2$, und der Elastizitätsmodul der Basisschicht in Querrichtung liegt bei größer 3 800 $N/mm^2$, vorzugsweise größer 4 000 $N/mm^2$ Überraschenderweise können die Elastizitätsmodule der Folie durch den Einsatz des Polypropylens, welches mittels Metallocen-Katalysator hergestellt wird, deutlich verbessert werden. Die verbesserten E-Moduli der Basisschicht tragen zu den verbesserten mechanischen Eigenschaften der Folie bei.

Überraschenderweise sind die erfindungsgemäßen Folien selbst mit einer Dicke von unter 20 µm noch ausreichend steif, um auf den modernen schnellaufenden Verpackungsmaschinen verarbeitet zu werden. Die erhöhte Foliensteifigkeit wird möglicherweise darauf zurückgeführt, daß die räumlich anders angeordneten $CH_3$-Gruppen der boPP-Folie wie Haltepunkte wirken, die das Abgleiten der Kristallebenen bei entsprechender Belastung behindern.

Außerdem zeichnet sich die Folie durch niedrige Warmblockwerte und durch ein ausgezeichnetes, blockfreies Verhalten bei der Weiterverarbeitung aus. Weiterhin zeichnen sich die Folien durch eine erhöhte Barriere vor allem gegenüber Wasserdampf und Sauerstoff aus.

Zur Charakterisierung der Rohstoffe und der Folien wurden die folgenden Meßmethoden benutzt:

Schmelzflußindex

Der Schmelzflußindex wurde nach DIN 53 735 bei 21,6 N Belastung und 230°C gemessen.

Schmelzpunkt

DSC-Messung, Maximum der Schmelzkurve, Aufheizgeschwindigkeit 20°C/min.

Wasserdampf- und Sauerstoffdurchlässigkeit

Die Wasserdampfdurchlässigkeit wird gemäß DIN 53 122 Teil 2 bestimmt. Die Bestimmung der Sauerstoffbarrierewirkung erfolgt gemäß Entwurf DIN 53 380 Teil 3 bei einer Luftfeuchte von 53 %.

Trübung

Die Trübung der Folie wurde nach ASTM-D 1003-52 gemessen.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60 oder 85 eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Oberflächenspannung

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Reißfestigkeit, Reißdehnung

Die Reißfestigkeit und die Reißdehnung werden nach DIN 53455 bestimmt.

E-Modul

Der E-Modul wird gemäß DIN 53 457 bzw. ASTM 882 bestimmt.

Bestimmung des Warmblockverhaltens

Zur Messung des Warmblockverhaltens werden zwei einseitig filzbeklebte Holzklötzchen mit den Abmessungen 72 mm x 41 mm x 13 mm in die zu vermessende Folie eingeschlagen und gesiegelt. Auf die mit den Filzauflagen zueinandergekehrten Holzklötzchen wird ein Gewicht von 200 g plaziert und dieser Aufbau in einen auf 70°C vortemperierten Wärmeofen gebracht und dort über 2 h belassen. Danach wird für 30 min auf Raumtemperatur (21°C) abgekühlt, das Gewicht von den Holzklötzchen heruntergenommen und das obere Klötzchen mittels einer mechanischen Apparatur vom unteren Klötzchen heruntergezogen. Die Auswertung erfolgt über 4 Einzelmessungen, über die dann eine maximale Abschubkraft (gemessen in N) festgestellt wird. Die Spezifikation ist erfüllt, wenn keine der Einzelmessungen über 5 N liegt.

Molekulargewichtsbestimmung

Das mittlere Molekulargewicht $M_w$ und $M_n$ (Gewichtsmittel $M_w$ und Zahlenmittel $M_n$) und die mittlere Molmassen-Dispersität wurden in Anlehnung an DIN 55 672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur (135°C) durchgeführt.

Isotaktischer Anteil

Der isotaktische Anteil des Homopolymeren als auch der isotaktische Anteil der Folie können in Näherung durch die unlösliche Fraktion des Rohstoffes bzw. der Folie in einem geeigneten Lösungsmittel charakterisiert werden. Es hat sich als zweckmäßig erwiesen n-Heptan zu verwenden. Üblicherweise führt man eine Soxhlet-Extraktion mit siedendem n-Heptan durch. Zur Erzielung einer guten Reproduzierbarkeit ist es zweckmäßig, das Soxhlet anstelle von Granulat mit einem Preßling zu befüllen. Die Dicke des Preßlings sollte hierbei 500 Mikrometer nicht übersteigen. Für die quantitative Erfassung des ataktischen Anteils des Polymeren ist es von entscheidender Bedeutung, eine ausreichende Extraktionszeit sicherzustellen. In der Regel liegt die Extraktionszeit im Bereich von 8 bis 24 Stunden.

Die operationelle Definition des isotaktischen Anteils $PP_{iso}$ in Prozent ist gegeben durch das Verhältnis der Gewichte der getrockneten n-heptanunlöslichen Fraktion zur Einwaage:

$$PP_{iso} = 100x \text{ (n-heptanunlösliche Fraktion/Einwaage)}$$

Eine Analyse des getrockneten n-Heptan-Extraktes zeigt, daß dieser in der Regel nicht aus reinem ataktischen Propylenpolymeren besteht. Bei der Extraktion werden auch aliphatische und olefinische Oligomere, insbesondere isotaktische Oligomere sowie auch mögliche Zusatzstoffe wie z.B. hydrierte Kohlenwasserstoffharze, miterfaßt.

Kettenisotaxie-Index

Der oben definierte isotaktische Anteil $PP_{iso}$ ist für die Charakterisierung der Kettenisotaxie der Polymeren nicht ausreichend. Es erweist sich als sinnvoll, den Kettenisotaxie-Index II des Propylenpolymeren mittels hochauflösender $^{13}C$-NMR-Spektroskopie zu bestimmen, wobei als NMR-Probe nicht der Originalrohstoff, sondern dessen n-heptanunlösliche Fraktion zu wählen ist. Zur Charakterisierung der Isotaxie von Polymerketten benutzt man in der Praxis meist den $^{13}C$-NMR-spektroskopischen Triaden-Isotaxie-Index II (Triaden).

Bestimmung des triadenbezogenen Kettenisotaxie-Index II (Triaden) Die Bestimmung des Kettenisotaxie-Index II (Triaden) des n-heptanunlöslichen Anteils des Polymeren sowie der Folie wird aus dessen bzw. deren $^{13}C$NMR-Spektrum bestimmt. Man vergleicht die Intensitäten von Triaden-Signalen, welche aus den Methylgruppen mit unterschiedlichen lokalen Umgebungen resultieren.

Hinsichtlich der Auswertung des $^{13}C$-NMR-Spektrums sind zwei Fälle zu unterscheiden:

A) Der untersuchte Rohstoff ist ein reines Propylenhomopolymer ohne statistischen $C_2$-Gehalt.
B) Der untersuchte Rohstoff ist ein Propylenpolymer mit einem geringen statistischen $C_2$-Gehalt, im folgenden $C_2$-$C_3$-Copolymer genannt.

Fall A:

Der Kettenisotaxie-Index des Homopolymeren wird aus dessen $^{13}C$-NMR-Spektrum bestimmt. Man vergleicht die Intensitäten von Signalen, welche aus den Methylgruppen mit unterschiedlicher Umgebung resultieren. Im $^{13}C$-NMR-Spektrum eines Homopolymeren treten im wesentlichen drei Gruppen von Signalen, sogenannte Triaden, auf.

1. Bei einer chemischen Verschiebung von etwa 21 bis 22 ppm tritt die "mm-Triade" auf, welche den Methylgruppen mit links und rechts unmittelbar benachbarten Methylgruppen zugeordnet wird.

2. Bei einer chemischen Verschiebung von etwa 20,2 bis 21 ppm tritt die "mr-Triade" auf, welche den Methylgruppen mit links oder rechts unmittelbar benachbarten Methylgruppen zugeordnet wird.

3. Bei einer chemischen Verschiebung von etwa 19,3 bis 20 ppm tritt die "rr-Triade" auf, welche den Methylgruppen ohne unmittelbar benachbarte Methylgruppen zugeordnet wird.

Die Intensitäten der zugeordneten Signalgruppen werden als Integral der Signale bestimmt. Der Kettenisotaxie-Index ist wie folgt definiert:

$$\text{II Triaden} = \frac{J_{mm} + 0{,}5\, J_{mr}}{J_{mm} + J_{mr} + J_{rr}} \cdot 100$$

worin $J_{mm}$, $J_{mr}$ und $J_{rr}$ die Integrale der zugeordneten Signalgruppen bedeuten.

Fall B:

Abb. 1 (nicht vorhanden in der gegenwärtigen Anmeldung) ist eine schematisch vergrößerte Darstellung eines $^{13}C$-NMR Spektrums von einem Ethylen-Propylen-Copolymeren. Die chemische Verschiebung der interessierenden Methylgruppen liegt im Bereich 19 bis 22 ppm. Wie in Abb. 1 ersichtlich kann das Spektrum der Methylgruppen in drei Blöcke unterteilt werden. In diesen Blöcken erscheinen die $CH_3$-Gruppen in triadischen Sequenzen, deren Zuordnung zu den lokalen Umgebungen im folgenden näher erläutert wird:

Block 1:

$CH_3$-Gruppen in der PPP-Sequenz (mm-Triade)

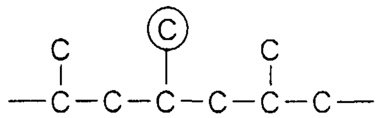

Block 2:

$CH_3$-Gruppen in der PPP-Sequenz (mr- oder rm-Triaden)

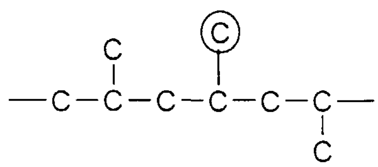

und $CH_3$-Gruppen in der EPP-Sequenz (m-Kette):

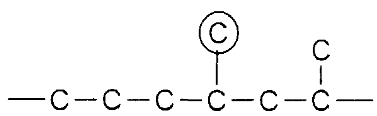

Block 3:

$CH_3$-Gruppen in der PPP-Sequenz (rr-Triaden):

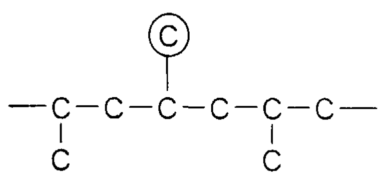

$CH_3$-Gruppen in einer EPP-Sequenz (r-Kette):

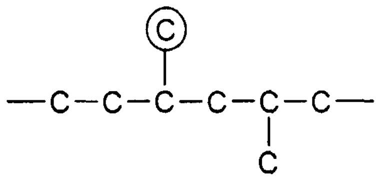

$CH_3$-Gruppen in einer EPE-Sequenz:

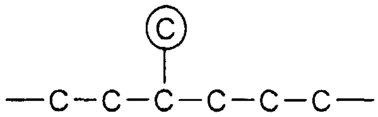

Bei der Bestimmung des triadenbezogenen Kettenisotaxie-Index II (Triaden) des n-heptanunlöslichen Anteils eines Ethylen-Propylen-Copolymers werden nur PPPTriaden in Betracht gezogen, d.h. nur solche Propylen-Einheiten, die zwischen zwei benachbarten Propylen-Einheiten liegen (siehe auch EP-B-0 115 940, Seite 3, Zeilen 48 und 49).
Die Definition des Triaden-Isotaxie-Index eines Ethylen-Propylen-Copolymeren lautet:

$$\text{II (Triaden)} = 100x(J_{mm}/J_{ppp})$$

Berechnung des Kettenisotaxie-Index eines Ethylen-Propylen-Copolymers:

1. $J_{mm}$ ist gegeben durch das Peakintegral von Block 1.

2. Berechne das Integral ($J_{gesamt}$) aller Methylgruppenpeaks in den Blöcken 1, 2 und 3.

3. Durch einfache Betrachtungen läßt sich zeigen, daß

$$J_{ppp} = J_{gesamt} - J_{EPP} - J_{EPE}.$$

Probenvorbereitung und Messung:

60 bis 100 mg Polypropylen werden in 10 mm-NMR-Röhrchen eingewogen und Hexachlorbutadien und Tetrachlorethan in einem Mischungsverhältnis von etwa 1,5:1 zugegeben, bis eine Füllhöhe von ca. 45 mm erreicht ist. Die Suspension wird so lange (in der Regel ca. eine Stunde) bei ca. 140°C aufbewahrt, bis eine homogene Lösung entstanden ist. Um den Lösevorgang zu beschleunigen, wird die Probe von Zeit zu Zeit mit einem Glasstab gerührt.
Die Aufnahme des $^{13}C$-NMR-Spektrums erfolgt bei erhöhter Temperatur (in der Regel 365 K) unter Standardmeßbedingungen (halbquantitativ).
Mittlere isotaktische Blocklänge $n_{iso}$
Die mittlere isotaktische Blocklänge $n_{iso}$ wird aus dem $^{13}C$-NMR-Spektrum gemäß der Formel

$$n_{iso} = 1 + 2\ J_{mm}/J_{mr}$$

bestimmt.

Herstellung der Propylenpolymeren

Die Propylenpolymeren wurden mit Hilfe von Metallocenkatalysatoren durch die im folgenden exemplarisch beschriebenen Polymerisationsreaktionen hergestellt:

Beispiel 1

Ein trockener 150 $dm^3$ großer Reaktor wurde mit Stickstoff gespült und bei 20°C mit 80 $dm^3$ eines Benzinschnittes mit dem Siedebereich 100 bis 120°C gefüllt. Dann wurde der Gasraum durch fünfmaliges Aufdrücken von Propylen, welches unter einem Druck von 2 bar steht, und Entspannen stickstofffrei gespült.

Nach Zugabe von 50 l flüssigem Propylen wurden 64 $cm^3$ toluolische Methylaluminoxlösung (entsprechend 100 m mol Al, Molmasse nach kryoskopischer Bestimmung 1000 g/mol) zugegeben und der Reaktorinhalt auf 50°C hochgeheizt. Durch Zudosierung von Wasserstoff wurde ein Wasserstoffgehalt im Gasraum des Reaktors von 1,2 % eingestellt und später dann durch Nachdosierung während der gesamten Polymerisationszeit konstant gehalten (Überprüfung on-line durch Gaschromatographie).

20 mg des Metallocens rac-Dimethylsilandiylbis (2-methyl-4,6-diisopropyl-1-indenyl) zirkondichlorid wurden in 16 ml toluolischer Methylaluminoxanlösung (entsprechend 25 m mol Al) gelöst und in den Reaktor gegeben.

Durch Kühlung wurde der Reaktor 10 h bei 50°C gehalten, dann wurde durch Zugabe von 50 $Ndm^3$ $CO_2$-Gas die Polymerisation gestoppt und das gebildete Polymer vom Suspensionsmedium abgetrennt und getrocknet.

Es wurden 21,9 kg Polymerpulver entsprechend einer Metallocenaktivität von 109,5 kg PP/ g Metallocen * h erhalten. Das Polymere ist durch folgende weitere Daten gekennzeichnet:

| | |
|---|---|
| Viskositätszahl VZ | 228 $cm^3$/g |
| mittlere Molmasse $M_w$ | 225 000 g/mol |
| $M_w/M_n$ | 2,5 |
| Schmelzpunkt $T_m$ | 150°C |
| Schmelzflußindex MFI | 7,0 g/10 min |
| Mittlere isotaktische Blocklänge $n_{iso}$ | 80 |
| Isotaxie-Index | 97,5 % |
| n-heptanlöslicher Anteil | 0,3 Gew.-% |

Beispiel 2

Die Polymerisation von Beispiel 1 wurde wiederholt, verwendet wurde jedoch das Metallocen rac-Dimethylsilandiylbis (2-methyl-4,5-benzo-1-indenyl) zirkondichlorid. Die Polymerisationstemperatur betrug 60°C und es wurden 6,5 h polymerisiert. Die Metallocenaktivität betrug in diesem Fall 173 kg PP/g Metallocen *h. Das Polymere ist durch die weiteren Daten wie folgt gekennzeichnet:

| | |
|---|---|
| Viskositätszahl VZ | 258 $cm^3$/g |
| mittlere Molmasse $M_w$ | 302 000 g/mol |
| $M_w/M_n$ | 2,3 |
| Schmelzpunkt $T_m$ | 147°C |
| Schmelzflußindex MFI | 4,3 g/10 min |
| Mittlere isotaktische Blocklänge $n_{iso}$ | ca. 80 |
| Isotaxie-Index | ca. 97,5 % |

Beipiel 3

Die Polymerisation von Beispiel 1 wurde wiederholt, verwendet wurden jedoch 10 mg des Metallocen rac-Dimethylsilandiylbis (2-methyl-4-phenyl-1-indenyl) zirkondichlorid. Die Wasserstoffkonzentration im Gasraum des Reaktors war 1,8 Vol.-%. Die Metallocenaktivität betrug 227 kg PP/g Metallocen *h. Das Polymere ist durch die weiteren Daten wie folgt gekennzeichnet:

| | |
|---|---|
| Viskositätszahl VZ | 230 $cm^3$/g |
| mittlere Molmasse $M_w$ | 274 500 g/mol |
| $M_w/M_n$ | 2,0 |
| Schmelzpunkt $T_m$ | 160°C |
| Schmelzflußindex MFI | 4,0 g/10 min |
| Mittlere isotaktische Blocklänge $n_{iso}$ | ca. 100 |
| Isotaxie-Index | ca. 98 % |

Beispiel 4

Es wurde wie in Beispiel 1 verfahren, während der Polymerisation wurden jedoch zwei unterschiedliche Wasserstoffkonzentrationen verwendet. Zunächst wurde im Gasraum des Reaktors ein Wasserstoffgehalt von 10 Vol.-% eingestellt und durch Nachdosierung konstant gehalten bis der Polypropylendruck im Reaktor durch Abpolymerisieren des Propylens auf 6 bar gefallen war. Dann wurde durch kurzes Abgasen der Wasserstoff auf 1,0 Vol.-% reduziert und bei dieser Wasserstoffkonzentration die Polymerisation weitergeführt.

Es wurden 10 mg des Metallocens rac-Dimethylsilandiylbis (2-ethyl-4-phenyl-1-indenyl) zirkondichlorid wurden in 16 ml toluolischer Methylaluminoxanlösung (entsprechend 25 m mol Al) gelöst und in den Reaktor gegeben.

Es wurden 16,2 kg Polymerpulver entsprechend einer Metallocenaktivität von 162 kg PP/ g Metallocen * h erhalten. Das Polymere ist durch folgende weitere Daten gekennzeichnet:

| | |
|---|---|
| Viskositätszahl VZ | 245 $cm^3/g$ |
| mittlere Molmasse $M_w$ | 358 000 g/mol |
| $M_w/M_n$ | 3,0 |
| Schmelzpunkt $T_m$ | 161°C |
| Schmelzflußindex MFI | 4,6 g/10 min |
| Mittlere isotaktische Blocklänge $n_{iso}$ | ca. 100 |
| Isotaxie-Index | ca. 98 % |

Herstellung der Folien

Beispiel 5

Es wurde durch Coextrusion und anschließende stufenweise Orientierung in Längs- und Querrichtung eine transparente dreischichtige Folie mit symmetrischem Aufbau mit einer Gesamtdicke von 16 µm hergestellt. Die Deckschichten hatten eine Dicke von jeweils 0,6 µm.

A-Basisschicht:

| | |
|---|---|
| 99,85 Gew.-% | hochisotaktisches Polypropylen der Firma Hoechst AG, hergestellt gemäß Beispiel 3 |
| 0,15 Gew.-% | Antistatikum (N,N-bis-ethoxyalkylamin) |

B-Deckschichten:

| | |
|---|---|
| 98,77 Gew.-% | statistisches Ethylen-Propylen-Copolymeres mit einem $C_2$-Gehalt von 4,5 Gew.-% |
| 0,33 Gew.-% | Antiblockmittel mit einer mittleren Teilchengröße von 2 µm |
| 0,90 Gew.-% | Gleitmittel |

Die Herstellungsbedingungen in den einzelnen Verfahrensschritten waren:

| | | | |
|---|---|---|---|
| Extrusion | Temperaturen | A-Schicht | 280°C |
| | | B-Schicht | 280°C |
| Längsstreckung | Temperatur | | 115°C |
| Querstreckung | Temperatur | | 160°C |
| | Querstreckverhältnis | | 11 |
| Fixierung | Temperatur | | 150°C |
| | Konvergenz | | 20 % |

Die auf diese Weise hergestellte Folie hatte die in der Tabelle aufgelisteten Eigenschaften (erste Zeile: Beispiel

5).

Vergleichsbeispiel 1

Im Vergleich zu Beispiel 5 wurde ein herkömmliches Polypropylen der Fa. Hoechst AG genommen. Der n-heptanlösliche Anteil der Folie hatte einen mittels $^{13}C$-NMR-Spektroskopie gemessenen Kettenisotaxie-Index von 93 %. Das $M_w/M_n$ betrug 4,5 und der n-heptanlösliche Anteil 4 Gew.-%.

Tabelle

| | Foliendicke | E-Modul | Reißfestigkeit | Reißdehnung | Glanz | Wasserdampfdurchlässigkeit | Trübung | Reibung 14 Tage nach Produktion | Kratzfestigkeit | Warmblockverhalten |
|---|---|---|---|---|---|---|---|---|---|---|
| | | DIN 53 457 längs/quer | DIN 53 455 längs/quer | DIN 53 455 längs/quer | DIN 67530 | DIN 53 122 | ASTM D 1003 52 | | | |
| | μm | $N/mm^2$ | $N/mm^2$ | % | | $g/m^2d$ | % | B-Seite/ B'-Seite | ΔTrübung | N |
| B5 | 16 | 2500/4300 | 120/65 | 125/70 | 140 | 1,6 | 1,9 | 0,22/0,23 | 23 | 1,5 |
| VB1 | 16 | 2100/4100 | 160/60 | 125/70 | 140 | 1,7 | 2,5 | 0,24/0,27 | 28 | 2,8 |

B = Beispiel; VB = Vergleichsbeispiel

B-Seite: Walzenseite

B'-Seite: Seite für die Corona- oder Flammbehandlung, falls diese Behandlung durchgeführt wird

**Patentansprüche**

1. Biaxial orientierte Polypropylenfolie, welche mindestens eine Basisschicht aufweist welche Polypropylen enthält, dadurch gekennzeichnet, daß

   - die mittlere isotaktische Blocklänge des Polypropylenmoleküls zwischen zwei Kettenbaufehlern im statistischen Mittel größer als 40 ist
   - der n-heptanunlösliche Anteil des Polypropylens einen Kettenisotaxie-Index, gemessen mittels $^{13}$C-NMR-Spektroskopie, von mindestens 95 % aufweist
   - das Verhältnis von Gewichtsmittel $M_w$ zu Zahlenmittel $M_n$ der Molekulargewichtsverteilung kleiner als 4 ist, und
   - der n-heptanlösliche Anteil des Polypropylens kleiner als 1 % ist.

2. Polypropylenfolie gemäß Anspruch 1, dadurch gekennzeichnet, daß der Elastizitätsmodul der Basisschicht in Längsrichtung größer 2 400 N/mm$^2$ und der Elastizitätsmodul der Folie in Querrichtung größer 3 800 N/mm$^2$ ist.

3. Polypropylenfolie gemäß einem oder mehreren der Ansprüche 1 bis 2, dadurch gekennzeichnet, daß die Basisschicht ein Polypropylen enthält, dessen n-heptanunlöslicher Anteil einen Kettenisotaxie-Index, gemessen mittels $^{13}$C-NMR-Spektroskopie, von mindestens 96 %, und insbesondere mindestens 97 %, aufweist.

4. Polypropylenfolie gemäß einem oder mehreren der Ansprüche 1 bis 3, dadurch gekennzeichnet, daß die Basisschicht ein Polypropylen enthält, dessen $M_w/M_n$ kleiner 3,0, und vorzugsweise kleiner als 2,7 ist.

5. Polypropylenfolie gemäß einem oder mehreren der Ansprüche 1 bis 4, dadurch gekennzeichnet, daß sie mindestens einseitig, vorzugsweise beidseitig, eine Deckschicht aus olefinischen Polymeren aufweist.

6. Polypropylenfolie gemäß einem oder mehreren der Ansprüche 1 bis 5, dadurch gekennzeichnet, daß ein- oder beidseitig Zwischenschicht/en aus olefinischen Polymeren zwischen der Basis- und der/den Deckschicht/en angebracht ist/sind.

7. Polypropylenfolie gemäß einem oder mehreren der Ansprüche 1 bis 6, dadurch gekennzeichnet, daß die Basis- und/oder Deckschicht/en und/oder Zwischenschicht/en Neutralisationsmittel und/oder Stabilisator enthalten.

8. Polypropylenfolie gemäß einem oder mehreren der Ansprüche 1 bis 7, dadurch gekennzeichnet, daß die Basisschicht Antistatikum enthält.

9. Polypropylenfolie gemäß einem oder mehreren der Ansprüche 1 bis 8, dadurch gekennzeichnet, daß die Deckschicht/en Gleitmittel und/oder Antiblockmittel enthält/enthalten.

10. Polypropylenfolie gemäß einem oder mehreren der Ansprüche 1 bis 9, dadurch gekennzeichnet, daß die Zwischenschicht/en Neutralisationsmittel, Stabilisator, Antistatika und/oder Antiblockmittel enthält/enthalten.

11. Polypropylenfolie gemäß einem oder mehreren der Ansprüche 1 bis 10, daß die Deckschicht/en siegelfähig ist/sind.

12. Polypropylenfolie gemäß einem oder mehreren der Ansprüche 1 bis 11, daß die Deckschicht/en nicht siegelfähig ist/sind.

13. Polypropylenfolie gemäß einem oder mehreren der Ansprüche 1 bis 12, dadurch gekennzeichnet, daß die Dicke der Folie 4 bis 100 µm beträgt, wobei die Basisschicht etwa 40 bis 60 % der Gesamtdicke ausmacht.

14. Polypropylenfolie gemäß einem oder mehreren der Ansprüche 1 bis 13, dadurch gekennzeichnet, daß sie einschichtig ist.

15. Verfahren zur Herstellung einer Polypropylenfolie gemäß Anspruch 1, dadurch gekennzeichnet, daß die Polymeren der einzelnen Schichten in einem Extruder erwärmt, komprimiert und aufgeschmolzen werden, die den einzelnen Schichten der Folie entsprechenden Schmelzen gemeinsam und gleichzeitig durch eine Flachdüse extrudiert werden und die so erhaltene Folie auf einer Abzugswalze gezogen wird, wobei sie sich abkühlt und verfestigt und die so erhaltene Vorfolie längs und quer orientiert wird, wobei die Orientierung in Längsrichtung mit einem Längsstreckverhältnis von 3:1 bis 9:1 und in Querrichtung mit einem Querstreckverhältnis von 4:1 bis 12:1 erfolgt.

16. Verwendung der Polypropylenfolie gemäß einem oder mehreren Ansprüchen 1 bis 14 als Verpackungsfolie.

17. Verwendung der Polypropylenfolie gemäß einem oder mehreren Ansprüchen 1 bis 14 als Kaschierfolie.

## Claims

1. Biaxially oriented polypropylene film having at least one base layer comprising polypropylene, characterised in that

- the mean isotactic block length of the polypropylene molecule between two structural chain defects is, as a statistical average, greater than 40,
- the n-heptane-insoluble fraction of the polypropylene has a chain isotactic index of at least 95%, measured by means of $^{13}$C-NMR spectroscopy,
- the ratio of the weight average $M_w$ to the number average $M_n$ of the molecular weight distribution is less than 4, and
- the n-heptane-soluble fraction of the polypropylene is less than 1%.

2. Polypropylene film according to claim 1, characterised in that the modulus of elasticity of the base layer in the longitudinal direction is greater than 2400 N/mm$^2$ and the modulus of elasticity of the film in the transverse direction is greater than 3800 N/mm$^2$.

3. Polypropylene film according to one or more of claims 1 and 2, characterised in that the base layer comprises a polypropylene, the n-heptane-insoluble fraction of which has a chain isotactic index, measured by means of $^{13}$C-NMR spectroscopy, of at least 96%, and especially of at least 97%.

4. Polypropylene film according to one or more of claims 1 to 3, characterised in that the base layer comprises a polypropylene, the $M_w/M_n$ of which is less than 3.0, and preferably less than 2.7.

5. Polypropylene film according to one or more of claims 1 to 4, characterised in that it has a cover layer of olefinic polymers on at least one side, preferably on both sides.

6. Polypropylene film according to one or more of claims 1 to 5, characterised in that an intermediate layer or intermediate layers of olefinic polymers on one or both sides is/are arranged between the base layer and the cover layer or cover layers.

7. Polypropylene film according to one or more of claims 1 to 6, characterised in that the base and or cover layer(s) and/or intermediate layer(s) comprise neutralising agent and/or stabiliser.

8. Polypropylene film according to one or more of claims 1 to 7, characterised in that the base layer comprises antistatic agent.

9. Polypropylene film according to one or more of claims 1 to 8, characterised in that the cover layer(s) comprise lubricant and/or antiblocking agent.

10. Polypropylene film according to one or more of claims 1 to 9, characterised in that the intermediate layer(s) comprise neutralising agent, stabiliser, antistatic agents and/or antiblocking agent.

11. Polypropylene film according to one or more of claims 1 to 10, wherein the cover layer(s) is/are sealable.

12. Polypropylene film according to one or more of claims 1 to 11, wherein the cover layer(s) is/are not sealable.

13. Polypropylene film according to one or more of claims 1 to 12, characterised in that the thickness of the film is from 4 to 100 µm, the base layer accounting for about from 40 to 60% of the total thickness.

14. Polypropylene film according to one or more of claims 1 to 13, characterised in that it is single-layer.

15. Process for the production of a polypropylene film according to claim 1, characterised in that the polymers of the individual layers are heated, compressed and melted in an extruder, the melts corresponding to the individual

layers of the film are extruded together simultaneously through a slot die, and the resulting film is drawn off onto a draw-off roll, during which the film cools and solidifies, the resulting prefilm being oriented longitudinally and transversely, the orientation in the longitudinal direction being effected with a longitudinal stretching ratio of from 3:1 to 9:1 and the orientation in the transverse direction being effected with a transverse stretching ratio of from 4:1 to 12:1.

**16.** Use of the polypropylene film according to one or more of claims 1 to 14 as a packaging film.

**17.** Use of the polypropylene film according to one or more of claims 1 to 14 as a laminating film.

**Revendications**

**1.** Feuille de polypropylène ayant subi une orientation biaxe, qui présente au moins une couche de base qui contient du polypropylène, caractérisée en ce que

- la longueur de séquence isotactique moyenne de la molécule de polypropylène entre deux défauts de structure de la chaîne dans la moyenne statistique est supérieure à 40,
- la fraction du polypropylène insoluble dans du n-heptane présente un indice d'isotaxie de chaîne mesuré par spectroscopie $^{13}C$-RMN s'élevant à au moins 95%,
- le rapport de la moyenne en poids $M_w$ à la moyenne en nombre $M_n$ de la distribution du poids moléculaire est inférieur à 4, et
- la fraction du polypropylène soluble dans du n-heptane est inférieure à 1%.

**2.** Feuille de polypropylène selon la revendication 1, caractérisée en ce que le module d'élasticité de la couche de base en direction longitudinale est supérieur à 2400 $N/mm^2$ et le module d'élasticité de la feuille en direction transversale est supérieur à 3800 $N/mm^2$.

**3.** Feuille de polypropylène selon une ou plusieurs des revendications 1 à 2, caractérisée en ce que la couche de base contient un polypropylène dont la fraction insoluble dans du n-heptane présente un indice d'isotaxie de chaîne mesuré par spectroscopie $^{13}C$-RMN d'au moins 96%, de préférence d'au moins 97%.

**4.** Feuille de polypropylène selon une ou plusieurs des revendications 1 à 3, caractérisée en ce que la couche de base contient un polypropylène dont le rapport $M_w/M_n$ est inférieur à 3,0, de préférence inférieur à 2,7.

**5.** Feuille de polypropylène selon une ou plusieurs des revendications 1 à 4, caractérisée en ce qu'elle présente, au moins sur une face, de préférence sur les deux faces, une couche de recouvrement constituée par des polymères oléfiniques.

**6.** Feuille de polypropylène selon une ou plusieurs des revendications 1 à 5, caractérisée en ce qu'une ou plusieurs couches intermédiaires unilatérales ou bilatérales constituée(s) par des polymères oléfiniques est ou sont appliquées entre la couche de base et la ou les couches de recouvrement.

**7.** Feuille de polypropylène selon une ou plusieurs des revendications 1 à 6, caractérisée en ce que la couche de base et/ou la ou les couches de recouvrement et/ou la ou les couches intermédiaires contient ou contiennent des agents de neutralisation et/ou des stabilisateurs.

**8.** Feuille de polypropylène selon une ou plusieurs des revendications 1 à 7, caractérisée en ce que la couche de base contient un agent antistatique.

**9.** Feuille de polypropylène selon une ou plusieurs des revendications 1 à 8, caractérisée en ce que la ou les couches de recouvrement contient ou contiennent des agents de glissement et/ou des agents s'opposant à l'adhérence de contact entre feuilles.

**10.** Feuille de polypropylène selon une ou plusieurs des revendications 1 à 9, caractérisée en ce que la ou les couches intermédiaires contient ou contiennent des agents de neutralisation, des stabilisateurs, des agents antistatiques et/ou des agents s'opposant à l'adhérence de contact entre feuilles.

**11.** Feuille de polypropylène selon une ou plusieurs des revendications 1 à 10, caractérisée en ce que la ou les couches de recouvrement est ou sont thermosoudables.

**12.** Feuille de polypropylène selon une ou plusieurs des revendications 1 à 11, caractérisée en ce que la ou les couches de recouvrement n'est pas ou ne sont pas thermosoudables.

**13.** Feuille de polypropylène selon une ou plusieurs des revendications 1 à 12, caractérisée en ce que l'épaisseur de la feuille s'élève de 4 à 100 pm, la couche de base représentant d'environ 40 à 60% de l'épaisseur totale.

**14.** Feuille de polypropylène selon une ou plusieurs des revendications 1 à 13, caractérisée en ce qu'elle comprend une seule couche.

**15.** Procédé pour la fabrication d'une feuille de polypropylène selon la revendication 1, caractérisé en ce qu'on chauffe les polymères des couches individuelles dans une extrudeuse, on les comprime et on les porte à fusion, on extrude les masses fondues correspondant aux couches individuelles de la feuille, de manière conjointe et de manière simultanée à travers une filière pour feuilles et on tend la feuille ainsi obtenue sur un rouleau tendeur, si bien qu'elle se refroidit et qu'elle durcit, et on soumet la feuille préliminaire ainsi obtenue à une orientation en direction longitudinale et en direction transversale, l'orientation en direction longitudinale étant réalisée avec un rapport d'étirage en direction longitudinale de 5:1 à 9:1 et en direction transversale avec un rapport d'étirage en direction transversale de 4:1 à 12:1.

**16.** Utilisation de la feuille de polypropylène selon une ou plusieurs des revendications 1 à 14 à titre de feuille d'emballage.

**17.** Utilisation de la feuille de polypropylène selon une ou plusieurs des revendications 1 à 14 à titre de feuille de contrecollage.